Europäisches Patentamt

European Patent Office

Office européen des brevets

(11) Publication number: **0 395 389 B1**

## EUROPEAN PATENT SPECIFICATION

(45) Date of publication of patent specification: **07.09.94**　(51) Int. Cl.5: **C04B 35/00**, H01B 3/12

(21) Application number: **90304474.1**

(22) Date of filing: **25.04.90**

(54) Dielectric ceramic composition for electronic devices.

(30) Priority: **26.04.89 JP 106836/89**
**09.02.90 JP 30415/90**

(43) Date of publication of application:
**31.10.90 Bulletin 90/44**

(45) Publication of the grant of the patent:
**07.09.94 Bulletin 94/36**

(84) Designated Contracting States:
**DE DK FR GB NL SE**

(56) References cited:
**FR-A- 2 588 857**

**JOURNAL OF THE AMERICAN CERAMIC SOCIETY vol. 69, no. 1, January 1986, COLUMBUS,OHIO,USA pages 34 - 37; K.WAKINO ET AL.: 'Far Infrared Reflection Spectra ofBa(Zn,Ta)O3-BaZrO3 dielectric Resonator Material'**

**JOURNAL OF THE AMERICAN CERAMIC SOCIETY vol. 68, no. 10, 1985, COLUMBUS,OHIO,USA pages 546 - 551; S.B.DESU ET AL.: 'Microwave Loss Ouality of BaZn1/3Ta2/3O3Ceramics'**

(73) Proprietor: **SUMITOMO SPECIAL METALS CO., LTD.**
**7-19, 4-chome, Kitahama,**
**Chuo-ku**
**Osaka City, Osaka (JP)**

(72) Inventor: **Kageyama, Keisuke, c/o Yamazaki Seikakusho**
**Sumitomo Special Metal Co., Ltd.,**
**15-17, 2-chome**
**Egawa, Shimamoto-cho, Mishima-gun, Osaka (JP)**

(74) Representative: **Livsey, Gilbert Charlesworth Norris et al**
**HYDE, HEIDE & O'DONNELL**
**10-12 Priests Bridge**
**London SW15 5JE (GB)**

Rank Xerox (UK) Business Services
(3.10/3.09/3.3.3)

EP 0 395 389 B1

## Description

This invention relates to dielectric ceramic compositions used in making electronic devices. More particularly, it relates to compositions which comprise compounds having a perovskite structure and are particularly useful in making devices used in the SHF range.

There are known dielectric ceramic compositions which are used in making electronic devices because of their small power loss and their good temperature characteristics. Those devices include temperature compensating capacitors, dielectric resonators for direct reception of satellite broadcasting, or for down converters (in which those compositions are used because of their small power loss in the SHF range), and substrates for microwave strip lines.

Many compounds having a perovskite structure are used for dielectric ceramic compositions which are employed in making devices used in the SHF range. Compounds of the formula

$$Ba(B_{1/3}.A_{2/3})O_3$$

where A is Ta and B is a bivalent metal ion (one or more of Zn, Ni, Co, and Mn), are used particularly widely, and more specifically the compound of the formula

$$Ba(Zn_{1/3}.Ta_{2/3})O_3$$

is used above all.

Dielectric ceramic compositions which are intended for use in the SHF range are strictly required to have a high dielectric constant $\epsilon_r$, a high unloaded Q value and a temperature coefficient of resonant frequency $\tau_f$ of 0. These requirements call for the precise control of the composition of any such material, which in turn necessitates a long time of sintering amounting to say, 100 hours at temperature of 1500°C.

It is particularly important to control the proportion of Zn accurately, as it is very likely to evaporate. Zn diffuses to the surface of a ceramic and volatilizes during a sintering operation, resulting in the formation of a compound not containing any Zn, such as $Ba_5Ta_4O_{15}$. This compound forms a "skin" and thereby makes it difficult to produce a ceramic having uniform quality and stable characteristics.

A long time of sintering at a high temperature is required for producing a material having a satisfactory high unloaded Q value. The necessity for a long sintering time is an obstacle to the mass production of any material under consideration.

For these and other problems, reference is made to "Microwave Loss Quality of $Ba(Zn_{1/3}.Ta_{2/3})O_3$ Ceramics", S B Desu and H M O'Bryan, Journal of American Ceramics Society 68 [10], 546-51 (1985).

Moreover, some applications call for a material having a specifically controlled temperature coefficient of resonant frequency $\tau_r$. It is, however, known that the material of the formula $Ba(Zn_{1/3}.Ta_{2/3})O_3$ has a temperature coefficient of resonant frequency in the vicinity of zero.

In view of these circumstances, it is desirable to provide an improved dielectric ceramic composition which is comparable, or even superior, to known compositions having the perovskite structure in unloaded Q, temperature coefficient and dielectric constant, is easy to control in composition without allowing for any substantial evaporation of Zn, and has such a high degree of sinterability as ensures the manufacture of ceramics having uniform quality by using only a short sintering time.

We have made an extensive study of the possibility of overcoming the drawbacks of the above-mentioned perovskite compound having the formula $Ba(Zn_{1/3}.Ta_{2/3})O_3$ and controlling the proportion of Zn in the dielectric ceramic composition. As a result, we have found that the inclusion of specific trivalent metal ions make it possible to control the proportion of Zn in the composition as desired, an thereby produce a ceramic having uniform quality, excellent electrical characteristics and high sinterability.

This discovery led to the development of a solid solution having the formula

$$XBa(Zn_{1/3}.Ta_{2/3})O_3 - YSr(Ga_{1/2}.Ta_{1/2})O_3.$$

We have also made a further study of the possibility of improving the unloaded Q value of the solid solution and controlling its temperature coefficient of resonant frequency $\tau_r$. As a result, we have found that its temperature coefficient of resonant frequency can be varied as desired if the ratio of Ba and Sr at the A sites of the perovskite compounds is appropriately altered.

According to the invention, therefore, there is provided a dielectric ceramic composition for use in making electronic devices of the $Ba(Zn_{1/3},Ta_{2/3})O_3$, characterised in that it has the formula:

2

$XBa(Zn_{1/3}.Ta_{2/3})O_3 - Y(Ba_Z.Sr_{1-Z})(Ga_{1/2}.Ta_{1/2})O_3$,

where

$X + Y = 1$;
$0.3 \leq X < 1$;
$0.7 \geq Y > 0$; and
$0 \leq Z \leq 1$.

The values of X and Y in the formula are required to fall within the ranges $0.3 \leq X < 1$ and $0.7 \geq Y > 0$. If Z is less than 0.3 and Y over 0.7, the composition will have an extremely low unloaded Q value and a very low temperature coefficient of resonant frequency $\tau_r$. If X is 1 and Y is 0, no improved unloaded Q value will be achieved. The value of Z is in the range between 0 and 1, both inclusive, and its variation permits the temperature coefficient of resonant frequency $\tau$, of the composition to be adjusted to a desired value.

These compositions have unloaded Q values of 7,000 to 13,000, temperature coefficients of resonant frequency $\tau_f$ up to 30 ppm/°C, and a dielectric constant $\epsilon_r$ of 28 to 32 at a frequency of 9 GHz. It is to be noted that the unloaded Q value and the dielectric constant are constant, but the temperature coefficients are different for the cases of $Z = 0$ and $Z > 0$; in the former case the temperature coefficient is in the range of from over 0 ppm/°C to 30 ppm/°C and in the latter case, in the range of from -10 ppm/°C to 30 ppm/°C.

The electrical characteristics are thus comparable, or even superior, to those which have been exhibited by the above-mentioned known ceramic dielectric compositions. When the present compositions are sintered, their compositions are easier to control, as the evaporation of Zn from the compositions is restrained to a certain extent. They have high sinterability and require only a short sintering time to produce a ceramic of uniform quality which is substantially free of any segregation of Zn. They can always be used reliably for making sintered products of high quality.

Similar results can be obtained if a bivalent metal ion such as $Ni^{2+}$, $Co^{2+}$, or $Mn^{2+}$, or an alkaline earth ion such as $Ca^{2+}$ or $Mg^{2+}$, is substituted for about 20 mol % or Zn in the compositions.

Moreover, the compositions have unloaded Q values of 10,000 to 13,000, temperature coefficients of resonant frequency $\tau_f$ or -5 to 5 ppm/°C and dielectric constants $\epsilon_r$ of 29 to 31 at a frequency of 9 GHz if X, Y and Z are chosen to satisfy the following relationships and ranges:

$X + Y = 1$;
$0.9 \leq X < 1$;
$0 < Y \leq 0.1$; and
$0.3 \leq Z \leq 1$.

Several examples of compositions in accordance with the invention will now be described more specifically and compared with examples of known compounds (nos. 7 to 9 and 18 to 21).

For each of the compositions shown in the Table below, the raw materials were weighed out in the stated proportions and were mixed together in a ball mill to make a wet mixture. The mixture was calcined at 1200°C for 2 hours, and was then ground by the ball mill to form a powder having an average particle diameter of about 1 $\mu$m. The powder was compacted, and heated at a temperature of 1500 to 1600 °C to produce a sintered body having a diameter at 10 mm and a length of 20 mm.

Each of the sintered products had its dielectric constant $\epsilon_r$, unloaded Q value, and temperature coefficient of resonant frequency $\tau_f$ at 25 °C and GHz measured. The results are shown in the Table. The dielectric constants and unloaded Q values were determined by the method proposed by Hakki and Celeman, et al, and employing a dielectric resonator. The following relationship was found to exist between the temperature coefficient of resonant frequency $\tau_f$, permittivity, temperature coefficient of permittivity $\tau_\epsilon$, and the coefficient of linear expansion $\chi$, of the ceramic:

$$\tau_f = -1/2\, \tau_\epsilon - \chi.$$

It is obvious from the Table that the present dielectric ceramic compositions all cause only a small power loss and have high dielectric constants, as the compositions shown in the first section of the Table (nos 1 to 6) exhibit temperature coefficients of resonant frequency having a wide range from about 0 to +30 ppm/°C, and those shown in the third section (nos 10 to 17) a still wider range from -10 to +30 ppm/°C.

TABLE

| Composition No | X | Y | Z | Sintering Conditions | | $\epsilon_t$ | Q | $\tau_f$ |
|---|---|---|---|---|---|---|---|---|
| | | | | °C | Time (hrs) | | | |
| 1 | 0.95 | 0.05 | 0 | 1500 | 2 | 31 | 13000 | +5 |
| 2 | 0.99 | 0.01 | 0 | 1500 | 2 | 30 | 7000 | +9 |
| 3 | 0.90 | 0.10 | 0 | 1500 | 2 | 31 | 11000 | +8 |
| 4 | 0.80 | 0.20 | 0 | 1500 | 2 | 32 | 11000 | +10 |
| 5 | 0.60 | 0.40 | 0 | 1600 | 2 | 32 | 7500 | +30 |
| 6 | 0.70 | 0.30 | 0 | 1550 | 2 | 28 | 7800 | +22 |
| 7 | 0 | 1 | 0 | 1500 | 2 | 27 | 6500 | -45 |
| 8 | 1 | 0 | 0 | 1500 | 2 | 30 | 3000 | +1 |
| 9 | 0.75 | 0.25 | 0 | 1600 | 2 | 28 | 3000 | +15 |
| 10 | 0.95 | 0.05 | 0.3 | 1500 | 2 | 31 | 13000 | +3 |
| 11 | 0.95 | 0.05 | 0.5 | 1500 | 10 | 31 | 13000 | +1 |
| 12 | 0.90 | 0.05 | 1.0 | 1500 | 24 | 31 | 12000 | -3 |
| 13 | 0.90 | 0.10 | 0.3 | 1500 | 2 | 30 | 12000 | +6 |
| 14 | 0.90 | 0.10 | 0.5 | 1500 | 10 | 30 | 10000 | +4 |
| 15 | 0.70 | 0.10 | 1.0 | 1500 | 24 | 30 | 10000 | +2 |
| 16 | 0.70 | 0.30 | 0.5 | 1550 | 10 | 28 | 7500 | +12 |
| 17 | 0.70 | 0.30 | 1.0 | 1550 | 24 | 28 | 7000 | +12 |
| 18 | 0 | 1 | 0 | 1500 | 2 | 27 | 6500 | -45 |
| 19 | 0 | 1 | 1 | 1500 | 2 | 26 | 4000 | -55 |
| 20 | 1 | 0 | 0 | 1500 | 2 | 30 | 3000 | +1 |
| 21 | 1 | 0 | 1 | 1500 | 2 | 30 | 3000 | -3 |

## Claims

1. A dielectric ceramic composition for use in making electronic devices of the $Ba(Zn_{1/3},Ta_{2/3})O_3$ type, characterised in that it has the formula:

$$XBa(Zn_{1/3}.Ta_{2/3})O_3 - Y(Ba_Z.Sr_{1-Z})(Ga_{1/2}.Ta_{1/2})O_3,$$

where

$X + Y = 1$;
$0.3 \leq X < 1$;
$0.7 \geq Y > 0$; and
$0 \leq Z \leq 1$.

2. A composition according to claim 1, characterised by an unloaded Q value of 7,000 to 13,000, a temperature coefficient of resonant frequency up to and including a maximum of 30 ppm/°C, and a dielectric constant of 28 to 32 at a frequency of 9 GHz.

3. A composition according to claim 1, characterised in that Z is 0, the composition having an unloaded Q value of 7,000 to 13,000, a temperature coefficient of resonant frequency ranging from a minimum over 0 ppm/°C to a maximum of 30 ppm/°C, and a dielectric constant of 28 to 32 at a frequency of 9 GHz.

4. A composition according to claim 1, characterised in that Z > 0, the composition having an unloaded Q value of 7,000 to 13,000, a temperature coefficient of resonant frequency ranging from a minimum over -10 ppm/°C to a maximum of 30 ppm/°C, and a dielectric constant of 28 to 32 at a frequency of 9 GHz.

**5.** A composition according to claim 1, characterised in that:

0.9 ≦ X < 1;
0 < Y ≦ 0.1; and
0.3 ≦ Z ≦ 1,

the composition having an unloaded Q value of 10,000 to 13,000, a temperature coefficient of resonant frequency ranging from -5 ppm/°C to 5 ppm/°C, and a dielectric constant of 29 to 31 at a frequency of 9 GHz.

**6.** A composition according to any previous claim, characterised by the modification that up to 20 mol % of Zn is replaced by a different bivalent metal.

**7.** A composition according to claim 6, characterised in that said different bivalent metal is Ni, Co, Mn, Ca or Mg.

**Patentansprüche**

**1.** Eine dielektrische keramische Zusammensetzung zur Verwendung bei der Herstellung elektronischer Geräte vom Typ $Ba(Zn_{1/3},Ta_{2/3})O_3$, dadurch gekennzeichnet, daß sie die Formel

$XBa(Zn_{1/3}.Ta_{2/3})O_3 - Y(Ba_Z.Sr_{1-z})(Ga_{1/2}.Ta_{1/2})O_3$,

besitzt, wobei

X + Y = 1;
0,3≦ X <1;
0,7 ≧ Y > 0; und
0 ≦ Z ≦ 1

ist.

**2.** Eine Zusammensetzung nach Anspruch 1, gekennzeichnet durch einen unbelasteten Q-Wert von 7 000 bis 13 000, einem Temperaturkoeffizienten der Resonanzfrequenz bis zu einem dieses einschließenden Maximum von 30 ppm/°C und einer Dielektrizitätskonstante von 28 bis 32 bei einer Frequenz von 9 GHz.

**3.** Eine Zusammensetzung nach Anspruch 1, dadurch gekennzeichnet, daß Z gleich 0 ist und die Zusammensetzung einen unbelasteten Q-Wert von 7 000 bis 13 000, einen Temperaturkoeffizienten der Resonanzfrequenz, welcher von einem Minimum oberhalb 0 ppm/°C bis zu einem Maximum von 30 ppm/°C reicht, und eine Dielektrizitätskonstante von 28 bis 32 bei einer Frequenz von 9 GHz aufweist.

**4.** Eine Zusammensetzung nach Anspruch 1, dadurch gekennzeichnet, daß Z > 0 und die Zusammensetzung einen umbelasteten Q-Wert von 7 000 bis 13 000, einen Temperaturkoeffizienten der Resonanzfrequenz, welcher von einem Minimum oberhalb -10 ppm/°C bis zu einem Maximum von 30 ppm/°C reicht, und eine Dielektrizitätskonstante von 28 bis 32 bei einer Frequenz von 9 GHz aufweist.

**5.** Eine Zusammensetzung nach Anspruch 1, dadurch gekennzeichnet, daß

0,9 ≦ X < 1;
0 < Y ≦ 0,1; und
0,3 ≦ Z ≦ 1 ist

und die Zusammensetzung einen unbelasteten Q-Wert von 10 000 bis 13 000, einen Temperaturkoeffizienten der Resonanzfrequenz, welcher von -5 ppm/°C bis 5 ppm/°C reicht, und eine Dielektrizitätskonstante von 29 bis 31 bei einer Frequenz von 9 GHz aufweist.

**6.** Eine Zusammensetzung nach einem der vorhergehenden Ansprüche, gekennzeichnet durch die Modifikation das bis zu 20 mol-% Zn durch ein anderes zweiwertiges Metall ersetzt sind.

**7.** Eine Zusammensetzung nach Anspruch 6, dadurch gekennzeichnet, daß das besagte andere zweiwertige Metall Ni, Co, Mn, Ca oder Mg ist.

**Revendications**

**1.** Une composition de céramique diélectrique prévue pour l'utilisation dans la fabrication de dispositifs électroniques du type $Ba(Zn_{1/3}, Ta_{2/3})O_3$, caractérisée en ce qu'elle a la formule :

$$XBa(Zn_{1/3},Ta_{2/3})O_3-Y(Ba_Z,Sr_{1-Z})(Ga_{1/2},Ta_{1/2})O_3$$

avec

$X + Y = 1;$
$0,3 \leqq X <1;$
$0,7 \geqq Y >0;$ et
$0 \leqq Z \leqq 1.$

**2.** Une composition selon la revendication 1, caractérisée par une valeur de Q à vide de 7000 à 13 000, un coefficient de température de la fréquence de résonance s'élevant jusqu'à un maximum de 30 ppm/°C et une constante diélectrique de 28 à 32 à une fréquence de 9 GHz.

**3.** Une composition selon la revendication 1, caractérisée en ce que Z est égal à 0, la composition ayant une valeur de Q à vide de 7000 à 13 000, un coefficient de température de la fréquence de résonance qui va d'un minimum au-delà de 0 ppm/°C jusqu'à un maximum de 30 ppm/°C et une constante diélectrique de 28 à 32 à une fréquence de 9 GHz.

**4.** Une composition selon la revendication 1, caractérisée en ce que Z > 0, la composition ayant une valeur de Q à vide de 7000 à 13 000, un coefficient de température de la fréquence de résonance allant d'un minimum au-delà de -10 ppm/°C jusqu'à un maximum de 30 mm/°C, et une constante diélectrique de 28 à 32 à une fréquence de 9 GHz.

**5.** Une composition selon la revendication 1, caractérisée en ce que :

$0,9 \leq X < 1;$
$0 < Y \leq 0,1;$ et
$0,3 \leqq Z \leqq 1,$

la composition ayant une valeur de Q à vide de 10 000 à 13 000, un coefficient de température de la fréquence de résonance allant de -5 ppm/°C à 5 ppm/°C, et une constante diélectrique de 29 à 31 à une fréquence de 9 GHz.

**6.** Une composition selon l'une quelconque des revendications précédentes, caractérisée par la modification qui consiste dans le remplacement de Zn, en un pourcentage molaire s'élevant jusqu'à 20%, par un métal bivalent différent.

**7.** Une composition selon la revendication 6, caractérisée en ce que le métal bivalent différent est Ni, Co, Mn, Ca ou Mg.